# EUROPEAN PATENT APPLICATION

(11) **EP 3 978 732 A1**
(43) Date of publication of application: **06.04.2022**
(21) Application number: 20815666.1
(22) Date of filing: 27.04.2020
(51) Int. Cl.: F01L 3/08, F16J 15/3204, F16J 15/3252

(54) **VALVE STEM SEAL**

(30) Priority: 27.05.2019 JP 2019098273
(71) Applicant: NOK Corporation, Minato-ku Tokyo 105-8585 (JP)
(72) Inventor: HIRAYAMA, Kazuhisa, Fukushima-shi, Fukushima 960-1193 (JP)
(74) Representative: TBK
(86) International application number: PCT/JP2020/017989
(87) International publication number: WO 2020/241152

(57) **Abstract**

[Problem] To provide a valve stem seal that can effectively prevent detachment from a valve guide. [Solution] Provided is a valve stem seal 1 comprising a metal ring 10 provided with a tubular portion 11 attached to an outer circumferential surface 2b of an end portion 2a of a valve guide 2, and a lip member 20 provided with a sealing lip 21 that is supported on the metal ring 10 so as to be in tight contact with a valve stem 5 passing through the valve guide 2, a cutout 14 being provided in the tubular portion 11, and a tongue-shaped engaging piece 15 being provided inside the cutout 14, the engaging piece 15 protruding towards an engaging recess 3 provided on the outer circumferential surface 2b of the valve guide 2 and engaging with the engaging recess 3 in a detachment direction D of the metal ring 10 from the valve guide 2, wherein the engaging piece 15 is formed so as to bend towards a radially inner side of the tubular portion 11 at an area extending from a starting end 15a of the engaging piece 15 by a first length L1 in the detachment direction D, the first length L1 being longer than a length L2, in an axial C direction of the tubular portion 11, from the bent area 15b to a tip 15c of the engaging piece 15.

## Description

### TECHNICAL FIELD

The present invention relates to a valve stem seal.

### BACKGROUND

Conventionally, a cylinder head is provided with a tubular valve guide, and a valve stem that is inserted through the valve guide and that moves reciprocally between a cam and a cylinder. In order to allow the valve stem and the valve guide to slide smoothly, lubricating oil is supplied, from the cam side, to the sliding surfaces of the valve stem and the valve guide. If the amount of lubricating oil that is supplied, i.e., the oil leakage amount, is too large, then the oil can sometimes leak into an air supply/exhaust port on the cylinder side and burn, generating white smoke. Additionally, if the oil leakage amount is too small, then burning or seizure may occur between the valve stem and the valve guide. In order to appropriately adjust the oil leakage amount to prevent the generation of white smoke or burning, seizure, and the like as mentioned above, a valve stem seal is provided on the cam-side end portion of the valve guide. The valve stem seal is provided so that the valve stem is inserted therethrough and so as to cover the cam-side end portion of the valve guide. The valve stem seal adjusts the oil leakage amount by a sealing lip provided thereon.

Back pressure due to exhaust gases acts on the valve stem seal from the cylinder side on which the valve is provided. In engines for automobiles and general industrial machinery, a trend towards downsizing has led to increased employment of turbochargers and the like, which is accompanied by higher back pressure from ports. When the back pressure is high, the sealing lip opens and gases leak to the cam side. Thus, valve stem seals are provided with back-pressure lips for preventing such leaks.

Thus, valve stem seals are in a state in which they receive back pressure from the cylinder side. Therefore, there is a concern that a valve stem seal could be detached from the valve guide to the cam side.

As a response thereto, Patent Document 1 discloses a valve stem seal having a metal ring provided with a tubular portion that is fitted externally around a valve guide, and a lip member provided with a sealing lip that is held on the metal ring and that makes tight contact with the valve stem, wherein a cutout is provided in the tubular portion, and a tongue-shaped engaging piece is provided inside the cutout, the engaging piece engaging, in the metal ring detachment direction, with an engaging recess provided in the outer radial surface of the valve guide.

### CITATION LIST

### PATENT LITERATURE

Patent Document 1: JP 6189168 B

### SUMMARY OF INVENTION

### TECHNICAL PROBLEM

A valve stem seal as mentioned above can be prevented from being detached from the valve guide because the engaging piece engages with the engaging recess in the valve guide.

A valve stem seal that can more effectively prevent detachment from the valve guide is sought.

The problem to be solved by the present invention is to provide a valve stem seal that can effectively prevent detachment from a valve guide.

### SOLUTION TO PROBLEM

The present invention employs the means below for solving the above-mentioned problem. Specifically, the present invention provides a valve stem seal comprising a metal ring provided with a tubular portion attached to an outer circumferential surface of an end portion of a valve guide, and a lip member provided with a sealing lip that is supported on the metal ring so as to be in tight contact with a valve stem passing through the valve guide, a cutout being provided in the tubular portion, and a tongue-shaped engaging piece being provided inside the cutout, the engaging piece protruding towards an engaging recess provided on the outer circumferential surface of the valve guide and engaging with the engaging recess in a detachment direction of the metal ring from the valve guide, wherein the engaging piece is formed so as to bend towards a radially inner side of the tubular portion at an area extending from a starting end of the engaging piece by a first length in the detachment direction, the first length being longer than a second length, in an axial direction of the tubular portion, from the bent area to a tip of the engaging piece.

The valve stem seal as described above is configured so that the engaging piece comprises an extension support portion, which is an area that is bent at a starting end towards the radially inner side of the tubular portion and that extends in the metal ring detachment direction, and an engaging portion, which is an area from the bent area to the tip. When attaching this valve stem seal to a valve guide, in a stage of attachment before the engaging piece engages with the engaging recess, the engaging portion of the engaging piece is pressed, by the outer circumferential surface of the valve guide, in the radially outward direction of the tubular portion, so as to largely move radially outward from the original position. In conjunction therewith, the tip of the extension support portion, which is the starting end of the engaging portion, also largely moves radially outward. Thus, the extension support portion deforms at the starting end and moves rotationally in the radially outward direction about the starting end. In this case, a first length, which is the length of the extension support portion, i.e., the radius of rotation during the rotational movement, is longer than a second length, which is the length of the engaging portion in the axial direction of the tubular portion. Thus, compared with the case in which the radius of rotation is shorter than the second length, the rotational angle of the rotational movement at the starting end of the engaging piece becomes smaller. As a result thereof, the engaging piece is prevented from being plastically deformed in the radially outward direction at the starting end due to the rotational movement of the engaging piece at the time of attachment, and the engaging piece can be engaged with the engaging recess at a deep position. Therefore, a valve stem seal that can effectively prevent detachment from the valve guide can be provided.

Additionally, the present invention provides a valve stem seal comprising a metal ring provided with a tubular portion attached to an outer circumferential surface of an end portion of a valve guide, and a lip member provided with a sealing lip that is supported on the metal ring so as to be in tight contact with a valve stem passing through the valve guide, a cutout being provided in the tubular portion, and a tongue-shaped engaging piece being provided inside the cutout, the engaging piece protruding towards an engaging recess provided on the outer circumferential surface of the valve guide and engaging with the engaging recess in a detachment direction of the metal ring from the valve guide, wherein the tubular portion comprises a first tubular portion and a second tubular portion; an inner circumferential surface of the first tubular portion is attached so as to be near or in contact with the outer circumferential surface of the valve guide; an inner circumferential surface of the second tubular portion is provided so as to be farther from an axis of the tubular portion than the inner circumferential surface of the first tubular portion is; and the engaging piece is provided on the second tubular portion, and a tip of the engaging piece is provided nearer to the axis than the inner circumferential surface of the first tubular portion is.

When attaching the valve stem seal as described above to a valve guide, in a stage of attachment before the engaging piece engages with the engaging recess, the tip of the engaging piece is provided nearer to the axis of the tubular portion than is the inner circumferential surface of the first tubular portion, which is near or in contact with the outer circumferential surface of the valve guide. Thus, the tip of the engaging piece is pressed in the radially outward direction of the tubular portion by the outer circumferential surface of the valve guide, and largely moves radially outward from the original position. In conjunction therewith, the engaging piece deforms at the starting end and moves rotationally in the radially outward direction about the starting end.

In this case, the tubular portion comprises a first tubular portion and a second tubular portion; an inner circumferential surface of the first tubular portion is attached so as to be near or in contact with the outer circumferential surface of the valve guide; an inner circumferential surface of the second tubular portion is provided so as to be farther from an axis of the tubular portion than the inner circumferential surface of the first tubular portion is; and the engaging piece is provided on the second tubular portion. Accordingly, the starting end of the engaging piece is provided on the second tubular portion, which is positioned at a distance from the outer circumferential surface of the valve guide. Therefore, the length of the engaging piece is longer than that in the case in which the starting end of the engaging piece is provided near the outer circumferential surface of the valve guide, by at least the distance of separation between the inner circumferential surface of the second tubular portion and the inner circumferential surface of the first tubular portion. For this reason, the radius of rotation for the above-mentioned rotational movement is made longer and the rotational angle of the rotational movement at the starting end of the engaging piece is made smaller. As a result thereof, the engaging piece is prevented from being plastically deformed in the radially outward direction at the starting end due to the rotational movement of the engaging piece at the time of attachment, and the engaging piece can be engaged with the engaging recess at a deep position. Therefore, a valve stem seal that can effectively prevent detachment from the valve guide can be provided.

### EFFECTS OF INVENTION

According to the present invention, a valve stem seal that can effectively prevent detachment from a valve guide can be provided.

### BRIEF DESCRIPTION OF DRAWINGS

Figure 1 is a partially cut-away front view of a valve stem seal according to a first embodiment of the present invention.
Figure 2 is an explanatory diagram indicating a state of the valve stem seal according to the above-mentioned first embodiment when being attached to a valve guide.
Figure 3 is a partially cut-away front view of a valve stem seal according to a second embodiment of the present invention.
Figure 4 is an explanatory diagram indicating a state of the valve stem seal according to the above-mentioned second embodiment when being attached to a valve guide.
Figure 5 is an explanatory diagram of a valve stem steal according to a modified example of the above-mentioned second embodiment.

### DESCRIPTION OF EMBODIMENTS

Embodiments of the present invention will be described below with reference to the drawings.

### [First Embodiment]

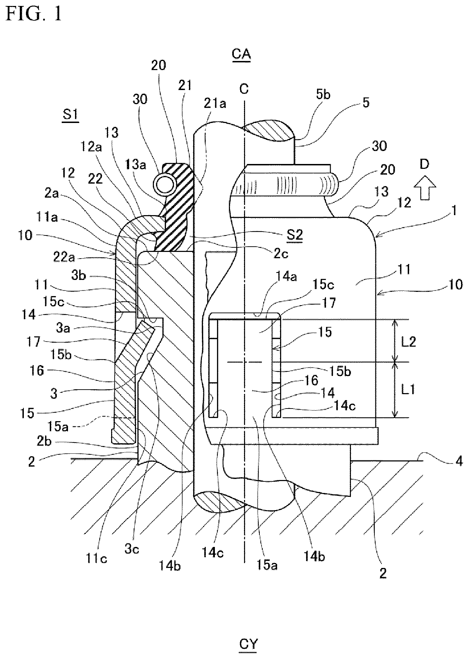

Figure 1 is a partially cut-away front view of a valve stem seal 1 according to a first embodiment of the present invention. The valve stem seal 1 is provided on a cylinder head 4. More specifically, the cylinder head 4 is provided with a tubular valve guide 2 that passes through a wall partitioning the cylinder side CY of the cylinder head 4 from the cam side CA thereof. A valve stem 5 is provided on the inner side of the valve guide 2 so as to pass through the valve guide 2. On the outer circumferential surface 2b of the cam-side CA end portion 2a of the valve guide 2 that is provided in this way, the valve stem seal 1 is provided so as to cover the end portion 2a.

The valve stem seal 1 is provided with a metal ring 10 that is formed with an annular shape, and a lip member 20.

The metal ring 10 is provided with a tubular portion 11, a bent portion 12, and a flange portion 13. The tubular portion 11 is formed so as to be substantially cylindrical, with the axis C as the central axis. The bent portion 12 is provided such that, at one end portion 11a in the axis-C direction of the tubular portion 11, the tubular portion 11 bends, so as to trace an arc, in the radially inward direction, which is the direction orthogonal to the axis C and towards the axis C. The flange portion 13 is provided so as to extend slightly in the radially inward direction from an inner end portion 12a of the bent portion 12, substantially perpendicular to the axis C. Thus, the metal ring 10 is formed to be substantially L-shaped when viewed in cross-section on an imaginary plane including the axis C.

The lip member 20 is supported on the metal ring 10, and comprises a sealing lip 21 and a back-pressure lip 22.

The sealing lip 21 is provided so as to extend diagonally, from the flange portion 13 of the metal ring 10 in the direction opposite to the tubular portion 11 in the axis-C direction, and in the radially inward direction. The back-pressure lip 22 is provided so as to extend diagonally, from the flange portion 13 in the direction of the tubular portion 11 in the axis-C direction, and in the radially outward direction, which is the direction orthogonal to the axis C and away from the axis C.

The lip member 20 is composed of a rubber material such as, for example, a fluororubber or an acrylic rubber. The lip member 20 is formed by vulcanization molding, using a mold. In this case, due to the area around the inner end portion 13a of the flange portion 13 of the metal ring 10 being provided inside the mold, the lip member 20 is bonded to the flange portion 13 by vulcanization bonding and is formed integrally with the metal ring 10.

The valve stem seal 1, as mentioned above, is provided on a cam-side CA end portion 2a of the valve guide 2. More specifically, the valve stem seal 1 is attached to the valve guide 2, from the side of the metal ring 10 opposite to the flange portion 13 in the axis-C direction, with the valve guide 2 inserted inside the tubular portion 11 so that the inner circumferential surface 11c of the tubular portion 11 and the outer circumferential surface 2b of the valve guide 2 face each other and are near or in contact with each other. When the valve stem seal 1 is attached, the lip member 20 is in a state in which the tip 22a of the back-pressure lip 22 is in contact with and pressed against the cam-side end surface 2c of the valve guide 2, and the inner end portion 21a of the sealing lip 21 is in tight contact with the outer circumferential surface 5b of the valve stem 5 inserted in the valve guide 2, and is pressed radially outward. In Figure 1, the original shape of the sealing lip 21 before being attached to the valve stem seal 1 is indicated by double-dotted chain lines, and this area is deformed by being pressed against the outer circumferential surface 5b of the valve stem 5. As a result thereof, a space S1 on the outer side of the valve stem seal 1 is partitioned from a space S2 located on the radially inner side of the lip member 20.

In order to keep the metal ring 10 of the valve stem seal 1, which has been attached as described above, from moving in the detachment direction D from the valve guide 2 to the cam side CA and becoming detached, an engaging recess 3 is formed on the outer circumferential surface 2b of the valve guide 2, and engaging pieces 15 corresponding thereto are provided on the tubular portion 11 of the metal ring 10.

More specifically, cutouts 14 are provided in the tubular portion 11, and inside these cutouts 14, the engaging pieces 15, which are tongue-shaped, are provided so as to protrude towards the engaging recess 3 in the valve guide 2.

The cutouts 14 are each provided with two side edges 14b and an end edge 14a, which are continuous with each other.

The end edge 14a is formed so as to extend in the circumferential direction of the tubular portion 11 in a plane orthogonal to the axis C. The side edges 14b are formed so as to extend from both end portions of the end edge 14a towards the side opposite to the flange portion 13, and so as to be substantially parallel to the axis C. Thus, the cutouts 14 are formed so as to be substantially U-shaped, with the areas on the inner sides of the cutouts 14, excluding the areas between the two bottom edges 14c, which are the end portions of the respective side edges 14b opposite to the end edge 14a, cut free from the areas on the outer sides thereof. The engaging pieces 15 are formed by cutting the areas on the inner sides of the cutouts 14 free in this way.

These cutouts 14 may be formed by a punching process using a press.

As mentioned above, the engaging pieces 15 are continuous with the areas on the outer sides of the cutouts 14 due to the presence of the starting ends 15a, which are the areas between the two bottom edges 14c, and are formed as parts of the tubular portion 11. The engaging pieces 15 are formed to be tongue-shaped so as to extend in the detachment direction D from the starting ends 15a towards the flange portion 13 of the metal ring 10.

The engaging pieces 15 each comprise an extension support portion 16 and an engaging portion 17. The extension support portions 16 are provided so as to extend in the detachment direction D from the starting end 15a. The engaging pieces 15 are bent towards the radially inner side of the tubular portion 11 at the tips 15b, in the detachment direction D, of the extension support portions 16. The engaging portions 17 are the areas from these bent portions 15b to the tips 15c of the engaging pieces 15.

The engaging pieces 15 are each formed so that the length (first length) L1 of the extension support portion 16 in the axis-C direction is greater than the length (second length) L2 of the engaging portion 17 in the axis-C direction along the tubular portion 11.

The cutouts 14 and the engaging pieces 15 are provided in pairs at positions spaced apart from each other by 180 degrees in the circumferential direction on the tubular portion 11. In order to simplify the drawings and the explanation, the pair of engaging pieces 15 is illustrated at positions spaced apart by 90 degrees in the circumferential direction in Figure 1.

The engaging recess 3 in the valve guide 2 is provided at a position corresponding to the engaging pieces 15 when the valve stem seal 1 is attached to the valve guide 2. The engaging recess 3 is formed from a bottom surface 3a, a rising surface 3b, and a tapered surface 3c. The bottom surface 3a is provided at a position, in the radial direction of the engaging recess 3, that is innermost and close to the axis C. The rising surface 3b is formed, at the edge of the bottom surface 3a on the side towards the cam-side end surface 2c, so as to rise perpendicularly, radially outward, from the bottom surface 3a, and to perpendicularly meet the outer circumferential surface 2b of the valve guide 2. The tapered surface 3c is formed, at the edge of the bottom surface 3a opposite to the rising surface 3b, so as to meet the bottom surface 3a by forming an obtuse angle therewith, and to extend towards the outer circumferential surface 2b of the valve guide 2.

In the present embodiment, the engaging recess 3 is formed with an annular shape that is continuous, in the circumferential direction, on the outer circumference of the valve guide 2. However, the present invention is not limited thereto, and engaging recesses may be provided in parts, discontinuously in the circumferential direction, at positions corresponding to the engaging pieces 15.

The engaging pieces 15 on the valve stem seal 1 are housed in the engaging recess 3 when the valve stem seal 1 is attached to the valve guide 2. In this case, when the valve stem seal 1 receives back-pressure that is applied from the cylinder side CY, force is applied so as to cause the valve stem seal 1 to move in the detachment direction D. At this time, the tips 15c of the engaging portions 17 butt against the rising surface 3b of the engaging recess 3, thereby causing the engaging pieces 15 to engage with the engaging recess 3 in the detachment direction D. As a result thereof, the valve stem seal 1 is prevented from being detached from the valve guide 2.

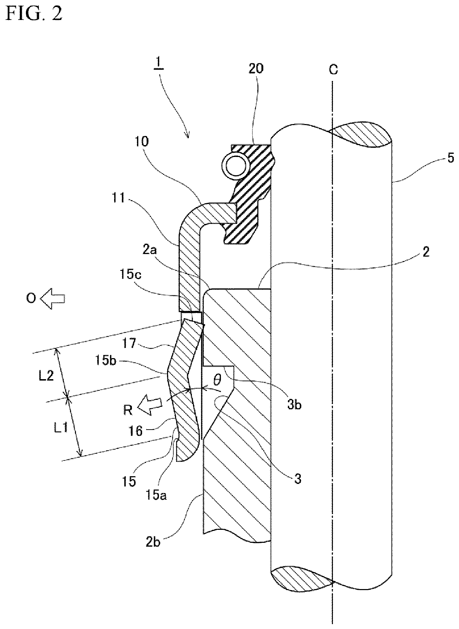

Next, using Figure 1 and Figure 2, the actions that are performed when attaching the above-mentioned valve stem seal 1 to the valve guide 2 will be explained. Figure 2 is an explanatory diagram indicating a state of the valve stem seal 1 when being attached to the valve guide 2.

The valve stem seal 1 as mentioned above is attached to the valve guide 2 by moving the metal ring 10, while covering one end 2a of the valve guide 2 therewith, to a position at which the engaging pieces 15 engage with the engaging recess 3 in the valve guide 2. During this attachment process, in a stage of attachment before the engaging pieces 15 engage with the engaging recess 3, the engaging portions 17 of the engaging pieces 15 are pressed, by the outer circumferential surface 2b of the valve guide 2, in the radially outward direction of the tubular portion 11, in the direction indicated as direction O in Figure 2, so as to largely move radially outward from the original position. In conjunction therewith, the tips, i.e., the bent portions 15b, on the extension support portions 16, which are the starting ends of the engaging portions 17, also largely move radially outward. Thus, the extension support portions 16 deform at the starting ends 15a and move rotationally in the direction R in a radially outward direction about the starting ends 15a.

In this case, the first length L1, which is the length of the extension support portions 16, becomes the radius of this rotational movement. Therefore, if the first length L1 is short, then the rotational angle θ of the extension support portions 16 at the starting ends 15a of the extension support portions 16, which is needed for this rotational movement, becomes large. Thus, there is a concern that the engaging pieces 15 can be plastically deformed by being bent largely in the radially outward direction of the tubular portion 11 at the starting ends 15a, as a result of which the engagement between the engaging pieces 15 and the engaging recess 3 can become shallow.

In this case, in the valve stem seal 1 of the present embodiment, the first length L1, which is the length of the extension support portions 16, i.e., the radius of rotation during the rotational movement, is longer than the second length L2, which is the length of the engaging portions 17 in the axis-C direction of the tubular portion 11. Thus, compared with the case in which the radius of rotation is shorter than the second length L2, the rotational angle θ of the rotational movement at the starting ends 15a of the engaging pieces 15 become smaller. As a result thereof, the starting ends 15a of the engaging pieces 15 are prevented from being plastically deformed in the radially outward direction due to the rotational movement of the engaging pieces 15 at the time of attachment.

Next, the effects of the above-described valve stem seal 1 will be explained.

The valve stem seal 1 as described above is a valve stem seal 1 comprising a metal ring 10 provided with a tubular portion 11 attached to an outer circumferential surface 2b of an end portion 2a of a valve guide 2, and a lip member 20 provided with a sealing lip 21 that is supported on the metal ring 10 so as to be in tight contact with a valve stem 5 passing through the valve guide 2, a cutout 14 being provided in the tubular portion 11, and a tongue-shaped engaging piece 15 being provided inside the cutout 14, the engaging piece 15 protruding towards an engaging recess 3 provided on the outer circumferential surface 2b of the valve guide 2 and engaging with the engaging recess 3 in a detachment direction D of the metal ring 10 from the valve guide 2, wherein the engaging piece 15 is formed so as to bend towards a radially inner side of the tubular portion 11 at an area extending from a starting end 15a of the engaging piece 15 by a first length L1 in the detachment direction D, the first length L1 being longer than a second length L2, in an axial C direction of the tubular portion 11, from the bent portion (bent area) 15b to a tip 15c of the engaging piece 15.

With the above-mentioned configuration, as explained in terms of actions above, the starting ends 15a of the engaging pieces 15 can be prevented from being plastically deformed in the radially outward direction due to the rotational movement of the engaging pieces 15 at the time of attachment, and the engaging pieces 15 can be engaged with the engaging recess 3 at a deep position. Therefore, a valve stem seal 1 that can effectively prevent detachment from the valve guide 2 can be provided.

### [Second Embodiment]

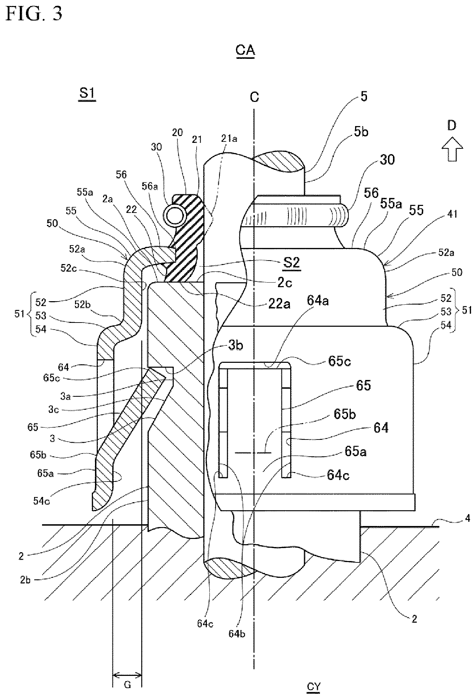

Figure 3 is a partially cut-away front view of a valve stem seal 41 according to a second embodiment of the present invention. The valve stem seal 41 is provided on the cylinder head 4. More specifically, the cylinder head 4 is provided with a tubular valve guide 2 that passes through a wall partitioning the cylinder side CY of the cylinder head 4 from the cam side CA thereof. A valve stem 5 is provided on the inner side of the valve guide 2 so as to pass through the valve guide 2. On the outer circumferential surface 2b of the cam-side CA end portion 2a of the valve guide 2 that is provided in this way, the valve stem seal 41 is provided so as to cover the end portion 2a.

The valve stem seal 41 is provided with a metal ring 50 that is formed with an annular shape, and a lip member 20.

The metal ring 50 is provided with a tubular portion 51, a bent portion 55, and a flange portion 56.

The tubular portion 51 comprises a first tubular portion 52 and a second tubular portion 54. The first tubular portion 52 is formed so as to be substantially cylindrical, with the axis C as the central axis. One end portion 52b of the first tubular portion 52 has a step portion 53 that, after bending in the radially outward direction, which is the direction orthogonal to the axis C and away from the axis C, further bends towards the side opposite to the first tubular portion 52 in the axis-C direction. The second tubular portion 54 is provided so as to be continuous with the step portion 53 on the side of the step portion 53 opposite to the first tubular portion 52. The second tubular portion 54 is formed so as to be substantially cylindrical, with a central axis that is the same as the axis C of the first tubular portion 52. As a result thereof, the inner circumferential surface 54c of the second tubular portion 54 is provided so as to be farther from the axis C, by the distance G, than the inner circumferential surface 52c of the first tubular portion 52 is.

The bent portion 55 is provided such that, at one end portion 52a of the first tubular portion 52 opposite to the second tubular portion 54 in the axis-C direction, the tubular portion 51 bends, so as to trace an arc, in the radially inward direction, which is the direction orthogonal to the axis C and towards the axis C. The flange portion 56 is provided so as to extend slightly in the radially inward direction from an inner end portion 55a of the bent portion 55, substantially perpendicular to the axis C.

The lip member 20 is supported on the metal ring 50, and comprises a sealing lip 21 and a back-pressure lip 22.

The sealing lip 21 is provided so as to extend diagonally, from the flange portion 56 of the metal ring 50 in the direction opposite to the tubular portion 51 in the axis-C direction, and in the radially inward direction. The back-pressure lip 22 is provided so as to extend diagonally, from the flange portion 56 in the direction of the tubular portion 51 in the axis-C direction, and in the radially outward direction.

The lip member 20 is composed of a rubber material such as, for example, a fluororubber or an acrylic rubber. The lip member 20 is formed by vulcanization molding, using a mold. In this case, due to the area around the inner end portion 56a of the flange portion 56 of the metal ring 50 being provided inside the mold, the lip member 20 is bonded to the flange portion 56 by vulcanization bonding and is formed integrally with the metal ring 50.

The valve stem seal 41, as mentioned above, is provided on the cam-side CA end portion 2a of the valve guide 2. More specifically, the valve stem seal 41 is attached to the valve guide 2, from the side of the metal ring 50 opposite to the flange portion 56 in the axis-C direction, with the valve guide 2 inserted inside the tubular portion 51 so that the inner circumferential surface 52c of the first tubular portion 52 and the outer circumferential surface 2b of the valve guide 2 face each other and are near or in contact with each other. When the valve stem seal 41 is attached, the lip member 20 is in a state in which the tip 22a of the back-pressure lip 22 is in contact with and pressed against the cam-side end surface 2c of the valve guide 2, and the inner end portion 21a of the sealing lip 21 is in tight contact with the outer circumferential surface 5b of the valve stem 5 inserted in the valve guide 2, and is pressed radially outward. In Figure 3, the original shape of the sealing lip 21 before being attached to the valve stem seal 41 is indicated by double-dotted chain lines, and this area is deformed by being pressed against the outer circumferential surface 5b of the valve stem 5. As a result thereof, a space S1 on the outer side of the valve stem seal 41 is partitioned from a space S2 located on the radially inner side of the lip member 20.

In order to keep the metal ring 50 of the valve stem seal 41, which is attached as described above, from moving, in the detachment direction D, from the valve guide 2 to the cam side CA and becoming detached, an engaging recess 3 is formed on the outer circumferential surface 2b of the valve guide 2, and engaging pieces 65 corresponding thereto are provided on the tubular portion 51 of the metal ring 50, specifically on the second tubular portion 54.

More specifically, cutouts 64 are provided in the second tubular portion 54, and inside these cutouts 64, the engaging pieces 65, which are tongue-shaped, are provided so as to protrude towards the engaging recess 3 in the valve guide 2.

The cutouts 64 are each provided with two side edges 64b and an end edge 64a, which are continuous with each other.

The end edge 64a is formed so as to extend in the circumferential direction of the tubular portion 51 in a plane orthogonal to the axis C. The side edges 64b are formed so as to extend from both end portions of the end edge 64a towards the side opposite to the flange portion 56, and so as to be substantially parallel to the axis C. Thus, the cutouts 64 are formed so as to be substantially U-shaped, with the areas on the inner sides of the cutouts 64, excluding the areas between the two bottom edges 64c, which are the end portions of the respective side edges 64b opposite to the end edge 64a, cut free from the areas on the outer sides thereof. The engaging pieces 65 are formed by cutting the areas on the inner sides of the cutouts 64 free in this way.

These cutouts 64 may be formed by a punching process using a press.

As mentioned above, the engaging pieces 65 are continuous with the areas on the outer sides of the cutouts 64 due to the presence of the starting ends 65a, which are the areas between the two bottom edges 64c, and are formed as parts of the second tubular portion 54. The engaging pieces 65 are formed to be tongue-shaped so as to extend in the detachment direction D from the starting ends 65a towards the flange portion 56 of the metal ring 50.

The engaging pieces 65 are bent towards the radially inner side of the second tubular portion 54 at portions 65b extending slightly in the detachment direction D from the starting ends 65a. The engaging pieces 65 are each formed so that the tips 65c thereof are provided nearer to the axis C than the inner circumferential surface 52c of the first tubular portion 52 is.

The cutouts 64 and the engaging pieces 65 are provided in pairs at positions spaced apart from each other by 180 degrees in the circumferential direction on the tubular portion 51. In order to simplify the drawings and the explanation, the pair of engaging pieces 65 is illustrated at positions spaced apart by 90 degrees in the circumferential direction in Figure 3.

The engaging recess 3 in the valve guide 2 is provided at a position corresponding to the engaging pieces 65 when the valve stem seal 41 is attached to the valve guide 2. The engaging recess 3 is formed from a bottom surface 3a, a rising surface 3b, and a tapered surface 3c. The bottom surface 3a is provided at a position, in the radial direction of the engaging recess 3, that is innermost and close to the axis C. The rising surface 3b is formed, at the edge of the bottom surface 3a on the side towards the cam-side end surface 2c, so as to rise perpendicularly, radially outward, from the bottom surface 3a, and to perpendicularly meet the outer circumferential surface 2b of the valve guide 2. The tapered surface 3c is formed, at the edge of the bottom surface 3a opposite to the rising surface 3b, so as to meet the bottom surface 3a by forming an obtuse angle therewith, and to extend towards the outer circumferential surface 2b of the valve guide 2.

In the present embodiment, the engaging recess 3 is formed with an annular shape that is continuous, in the circumferential direction, on the outer circumference of the valve guide 2. However, the present invention is not limited thereto, and engaging recesses may be provided in parts, discontinuously in the circumferential direction, at positions corresponding to the engaging pieces 65.

The engaging pieces 65 on the valve stem seal 41 are housed in the engaging recess 3 when the valve stem seal 41 is attached to the valve guide 2. In this case, when the valve stem seal 41 receives back-pressure that is applied from the cylinder side CY, force is applied so as to cause the valve stem seal 41 to move in the detachment direction D. At this time, the tips 65c of the engaging pieces 65 butt against the rising surface 3b of the engaging recess 3, thereby causing the engaging pieces 65 to engage with the engaging recess 3 in the detachment direction D. As a result thereof, the valve stem seal 41 is prevented from being detached from the valve guide 2.

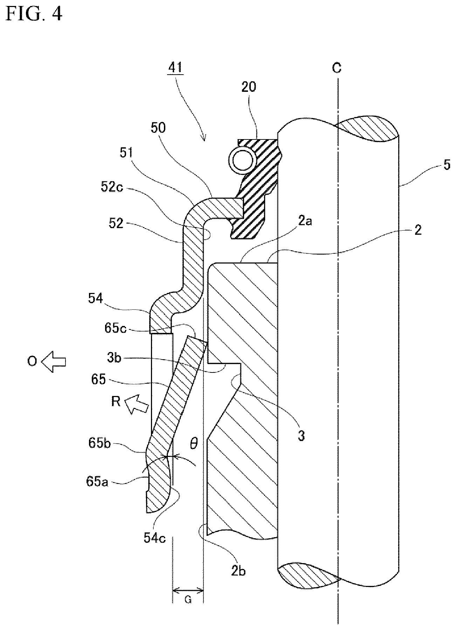

Next, using Figure 3 and Figure 4, the actions that are performed when attaching the above-mentioned valve stem seal 41 to the valve guide 2 will be explained. Figure 4 is an explanatory diagram indicating a state of the valve stem seal 41 when being attached to the valve guide 2.

The valve stem seal 41 as mentioned above is attached to the valve guide 2 by moving the metal ring 50, while covering one end 2a of the valve guide 2 therewith, to a position at which the engaging pieces 65 engage with the engaging recess 3 in the valve guide 2. During this attachment process, in a stage of attachment before the engaging pieces 65 engage with the engaging recess 3, the tips 65c of the engaging pieces 65 are provided nearer to the axis C of the tubular portion 51 than is the inner circumferential surface 52c of the first tubular portion 52, which is near or in contact with the outer circumferential surface 2b of the valve guide 2. Thus, the tips 65c of the engaging pieces 65 are pressed, by the outer circumferential surface 2b of the valve guide 2, in the radially outward direction of the tubular portion 51, in the direction indicated as direction O in Figure 4, so as to largely move radially outward from the original position. In conjunction therewith, the engaging pieces 65 deform at the starting ends 65a and move rotationally in the direction R in a radially outward direction about the starting ends 65a.

In this case, the length of the engaging pieces 65 becomes the radius of this rotational movement. Therefore, if the length of the engaging pieces 65 is short, then the rotational angle θ of the engaging pieces 65 at the starting ends 65a of the engaging pieces 65, which is needed for this rotational movement, becomes large. Thus, there is a concern that the engaging pieces 65 can be plastically deformed by being bent largely in the radially outward direction of the tubular portion 51 at the starting ends 65a, as a result of which the engagement between the engaging pieces 65 and the engaging recess 3 can become shallow.

In this case, in the valve stem seal 41 of the present embodiment, the tubular portion 51 comprises the first tubular portion 52 and the second tubular portion 54; the inner circumferential surface 52c of the first tubular portion 52 is attached so as to be near or in contact with the outer circumferential surface 2b of the valve guide 2; the inner circumferential surface 54c of the second tubular portion 54 is provided so as to be farther, by the distance G, from the axis C than the inner circumferential surface 52c of the first tubular portion 52 is; and the engaging pieces 65 are provided on the second tubular portion 54. That is, the starting ends 65a of the engaging pieces 65 are provided on a second tubular portion 54 positioned at a distance from the outer circumferential surface 2b of the valve guide 2. Therefore, the length of the engaging pieces 65 is longer than that in the case in which the starting ends 65a of the engaging pieces 65 are provided near the outer circumferential surface 2b of the valve guide 2, by at least the distance G of separation between the inner circumferential surface 54c of the second tubular portion 54 and the inner circumferential surface 52c of the first tubular portion 52. For this reason, the radius of rotation for the above-mentioned rotational movement is made longer and the rotational angle θ of the rotational movement at the starting ends 65a of the engaging pieces 65 is made smaller. As a result thereof, the starting ends 65a of the engaging pieces 65 are prevented from being plastically deformed in the radially outward direction due to the rotational movement of the engaging pieces 65 at the time of attachment.

Next, the effects of the above-described valve stem seal 41 will be explained.

The valve stem seal 41 as described above is a valve stem seal 41 comprising a metal ring 50 provided with a tubular portion 51 attached to an outer circumferential surface 2b of an end portion 2a of a valve guide 2, and a lip member 20 provided with a sealing lip 21 that is supported on the metal ring 50 so as to be in tight contact with a valve stem 5 passing through the valve guide 2, a cutout 64 being provided in the tubular portion 51, and a tongue-shaped engaging piece 65 being provided inside the cutout 64, the engaging piece 65 protruding towards an engaging recess 3 provided on the outer circumferential surface 2b of the valve guide 2 and engaging with the engaging recess 3 in a detachment direction D of the metal ring 50 from the valve guide 2, wherein the tubular portion 51 comprises a first tubular portion 52 and a second tubular portion 54; an inner circumferential surface 52c of the first tubular portion 52 is attached so as to be near or in contact with the outer circumferential surface 2b of the valve guide 2; an inner circumferential surface 54c of the second tubular portion 54 is provided farther in the radially outward direction of the tubular portion 51 than the inner circumferential surface 52c of the first tubular portion 52 is; and the engaging piece 65 is provided on the second tubular portion 54, a tip 65c of the engaging portion 65 being provided farther in the radially inward direction than the inner circumferential surface 52c of the first tubular portion 52 is.

With the above-mentioned configuration, as explained in terms of actions above, the starting ends 65a of the engaging pieces 65 can be prevented from being plastically deformed in the radially outward direction due to the rotational movement of the engaging pieces 65 at the time of attachment, and the engaging pieces 65 can be engaged with the engaging recess 3 at a deep position. Therefore, a valve stem seal 41 that can effectively prevent detachment from the valve guide 2 can be provided.

### [Modified Example of Second Embodiment]

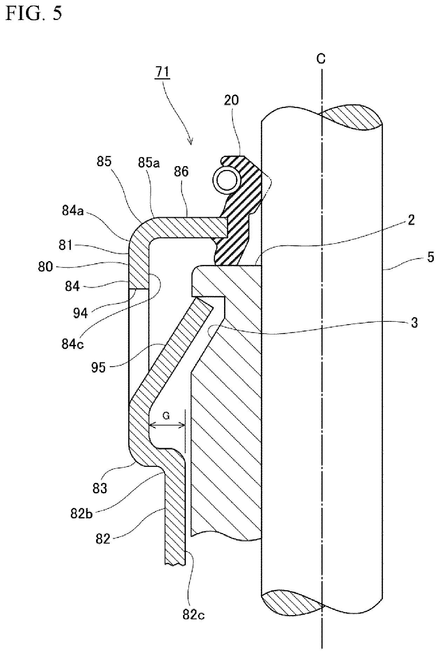

Next, a modified example of the valve stem seal 41 that was described as the second embodiment above will be explained by using Figure 5. Figure 5 is an explanatory diagram of the valve stem seal 71 in the present modified example. The valve stem seal 71 in the present modified example differs from the valve stem seal 41 in the above-described second embodiment in that the positions of the first tubular portion 82 and the second tubular portion 84 are different.

As in the second embodiment, the tubular portion 81 on the metal ring 80 of the valve stem seal 71 comprises a first tubular portion 82 and a second tubular portion 84. The first tubular portion 82 is formed so as to be substantially cylindrical, with the axis C as the central axis. One end portion 82b of the first tubular portion 82 has a step portion 83 that, after bending radially outwards, further bends towards the side opposite to the first tubular portion 82 in the axis-C direction. The second tubular portion 84 is provided so as to be continuous with the step portion 83 on the side of the step portion 53 opposite to the first tubular portion 82. The second tubular portion 84 is formed so as to be substantially cylindrical, with a central axis that is the same as the axis C of the first tubular portion 82. As a result thereof, the inner circumferential surface 84c of the second tubular portion 84 is provided so as to be farther from the axis C, by the distance G, than the inner circumferential surface 82c of the first tubular portion 82 is.

The bent portion 85 is provided such that, at an end portion 84a of the second tubular portion 84 opposite to the first tubular portion 82 in the axis-C direction, the second tubular portion 84 bends, so as to trace an arc, in the radial inward direction. A flange portion 86 is provided so as to extend in the radially inward direction from the inner end portion 85a of the bent portion 85, substantially perpendicular to the axis C.

As in the second embodiment, cutouts 94 and engaging pieces 95 are provided in the second tubular portion 84.

Needless to say, the present modified example provides effects similar to those of the second embodiment that have already been explained.

The valve stem seal of the present invention is not limited to the above-described embodiments and modified example explained with reference to the drawings, and various other modified examples may be contemplated within the technical scope thereof.

For example, in the above-described second embodiment, the first tubular portion 52 and the second tubular portion 54 are configured so as to be connected by the step portion 53. However, the invention is not limited to such a configuration. For example, the first tubular portion may gradually widen along the axis C to meet the second tubular portion. Alternatively, the inner circumferential surfaces of the first tubular portion 52 and the second tubular portion 54 may be formed at different positions in the radial direction, and the first tubular portion 52 may be formed to be thicker than the second tubular portion 54 so that the outer circumferential surfaces are formed at the same position in the radial direction.

Aside therefrom, the present invention may be modified, as appropriate, to other configurations by adopting or rejecting features in the above-described embodiments and modified example, as long as they do not depart from the spirit of the present invention.

For example, the valve stem seal may be configured as a combination of the above-described first embodiment and second embodiment. That is, the valve stem seal may have the configuration explained for the above-described second embodiment, while at the same time, the engaging pieces are bent towards the radially inner side of the tubular portion at areas extending from the starting ends of the engaging pieces by a first length in the detachment direction, the first length being longer than a second length, in the axial direction of the tubular portion, from the bent areas to the tips of the engaging pieces.

Due to such a configuration, the functions and effects explained for each of the first embodiment and the second embodiment can be synergized, thereby allowing a valve stem seal that can more effectively prevent detachment from the valve guide to be provided.

### REFERENCE SIGNS LIST

- 1, 41, 71: Valve stem seal
- 2: Valve guide
- 2a: End portion
- 2b: Outer circumferential surface
- 3: Engaging recess
- 5: Valve stem
- 10, 50, 80: Metal ring
- 11, 51, 81: Tubular portion
- 14, 64, 94: Cutout
- 15, 65, 95: Engaging piece
- 15a, 65a: Starting end
- 15b: Bent portion (bent area)
- 15c, 65c: Tip
- 16: Extension support portion
- 17: Engaging portion
- 20: Lip member
- 21: Sealing lip
- 22: Back-pressure lip
- 52, 82: First tubular portion
- 52c, 82c: Inner circumferential surface of first tubular portion
- 54, 84: Second tubular portion
- 54c, 84c: Inner circumferential surface of second tubular portion
- C: Axis
- D: Detachment direction
- L1: First length
- L2: Second length

## Claims

1. A valve stem seal comprising a metal ring provided with a tubular portion attached to an outer circumferential surface of an end portion of a valve guide, and a lip member provided with a sealing lip that is supported on the metal ring so as to be in tight contact with a valve stem passing through the valve guide, a cutout being provided in the tubular portion, and a tongue-shaped engaging piece being provided inside the cutout, the engaging piece protruding towards an engaging recess provided on the outer circumferential surface of the valve guide and engaging with the engaging recess in a detachment direction of the metal ring from the valve guide, wherein:
the engaging piece is formed so as to bend towards a radially inner side of the tubular portion at an area extending from a starting end of the engaging piece by a first length in the detachment direction, the first length being longer than a second length, in an axial direction of the tubular portion, from the bent area to a tip of the engaging piece.

2. A valve stem seal comprising a metal ring provided with a tubular portion attached to an outer circumferential surface of an end portion of a valve guide, and a lip member provided with a sealing lip that is supported on the metal ring so as to be in tight contact with a valve stem passing through the valve guide, a cutout being provided in the tubular portion, and a tongue-shaped engaging piece being provided inside the cutout, the engaging piece protruding towards an engaging recess provided on the outer circumferential surface of the valve guide and engaging with the engaging recess in a detachment direction of the metal ring from the valve guide, wherein:
the tubular portion comprises a first tubular portion and a second tubular portion;
an inner circumferential surface of the first tubular portion is attached so as to be near or in contact with the outer circumferential surface of the valve guide;
an inner circumferential surface of the second tubular portion is provided so as to be farther from an axis of the tubular portion than the inner circumferential surface of the first tubular portion is; and
the engaging piece is provided on the second tubular portion, and a tip of the engaging piece is provided nearer to the axis than the inner circumferential surface of the first tubular portion is.
